(19) Europäisches Patentamt
European Patent Office
Office européen des brevets

(11) **EP 2 107 675 A1**

(12) **EUROPEAN PATENT APPLICATION**
published in accordance with Art. 153(4) EPC

(43) Date of publication:
**07.10.2009 Bulletin 2009/41**

(51) Int Cl.:
***H02M 7/12*** *(2006.01)*

(21) Application number: **08710569.8**

(22) Date of filing: **23.01.2008**

(86) International application number:
**PCT/JP2008/050880**

(87) International publication number:
**WO 2008/090917 (31.07.2008 Gazette 2008/31)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **24.01.2007 JP 2007013332**

(71) Applicant: **Panasonic Corporation
Kadoma-shi
Osaka 571-8501 (JP)**

(72) Inventors:
• **TAKEDA, Yoshihiko
Osaka, 540-6207

(JP)**

• **KAWASAKI, Tomohiro
Osaka, 540-6207 (JP)**
• **KYOGOKU, Akihiro
Osaka, 540-6207 (JP)**
• **MAEDA, Shiro
Osaka, 540-6207 (JP)**

(74) Representative: **Unland, Jochen Hermann
Eisenfuhr, Speiser & Partner
P.O. Box 10 60 78
28060 Bremen (DE)**

(54) **DC POWER SUPPLY DEVICE AND AIR CONDITIONER USING THE SAME**

(57) A direct current power supply device that reduces harmonic current and improves the power factor also reduces power loss and simplifies the control unit. A low power loss, high power factor direct current power supply device with a simple configuration that does not require a transformer or current transformer as a detection unit, or a multiplier in the control unit, has an alternating current power supply, four diodes in a bridge configuration, a smoothing capacitor, a reactor connected to the AC power supply, two switch devices, a photocoupler for determining the voltage polarity of the AC power supply, a DC voltage detection unit, a target DC voltage setting unit, and a switch control unit.

Fig.1

**Description**

FIELD OF THE INVENTION

The present invention relates to a direct current power supply device that reduces harmonic current contained in the alternating current power source when converting alternating current to direct current and improves the power factor, and relates more particularly to a direct current power supply device and an air conditioner having the direct current power supply device.

BACKGROUND OF THE INVENTION

High frequency switching methods using a single transistor have conventionally been the primary circuit method used for direct current (DC) power supply devices with an output of up to several kilowatts in order to improve the input power factor and reduce harmonic currents.

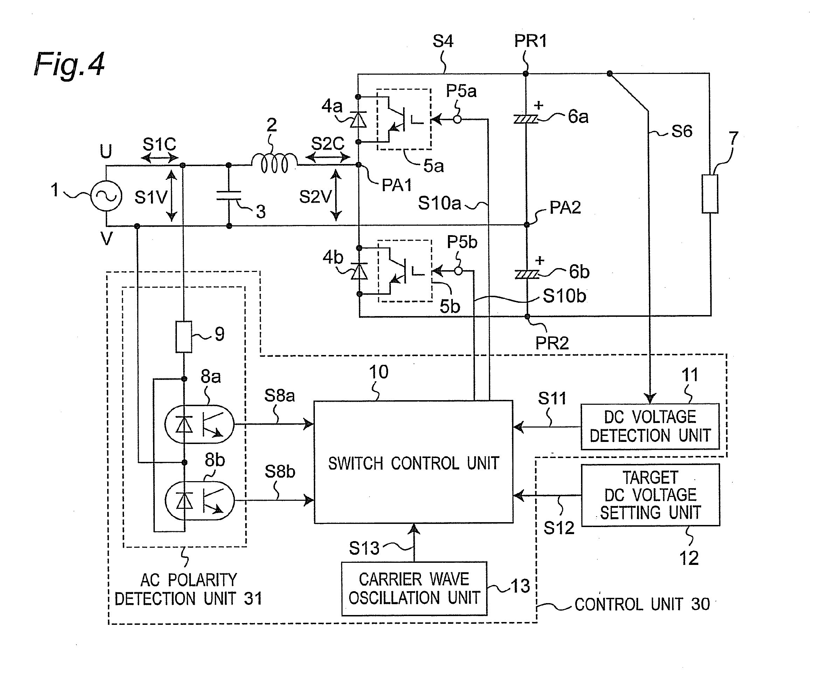

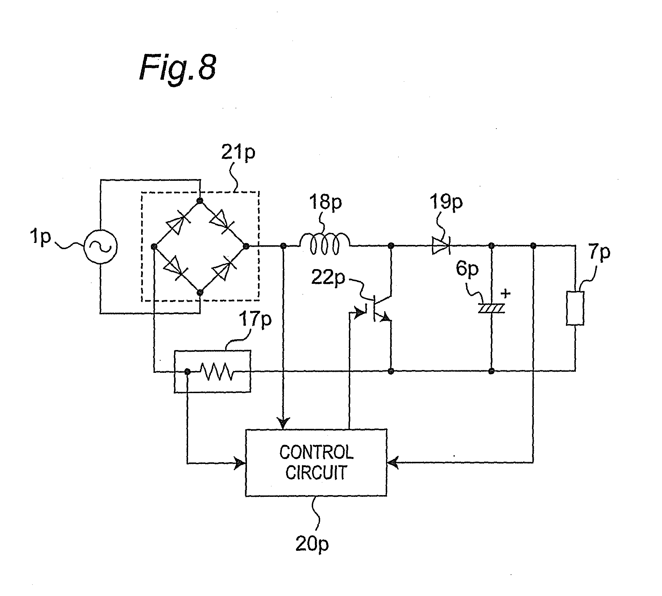

A circuit block diagram of the most basic DC power supply device according to the related art that uses such a single transistor high frequency switching design is shown in FIG. 8. As shown in FIG. 8, the main circuit includes a bridge rectifier circuit 21 p, a DC reactor 18p, a switch 22p, a reverse-current prevention diode 19p, a smoothing capacitor 6p, and a control circuit 20p. The control circuit 20p controls the DC voltage at both ends of the smoothing capacitor 6p, and controls the switch so that the current detected by a current detection circuit 17p is a sine wave. See, for example, Japanese Laid-open Patent Publication No. H8-321425, FIG. 4.

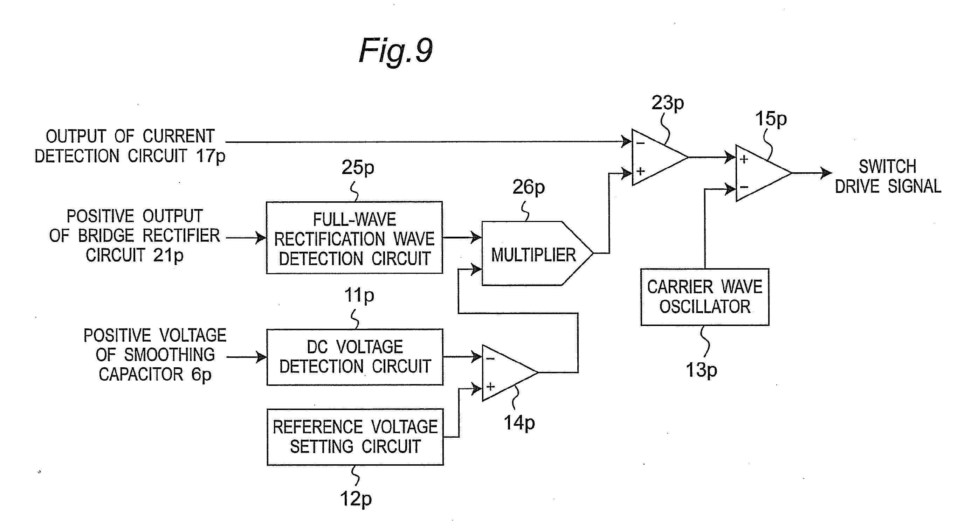

The operation of this conventional single-transistor high frequency switching DC power supply device is described next with reference to FIG. 9.

FIG. 9 is a block diagram showing the configuration of the control circuit 20 shown in FIG. 8 broken down in greater detail into the component parts. In this DC power supply device a DC voltage detection circuit 11p detects the DC voltage from the positive electrode of the smoothing capacitor 6p. A voltage difference amplifier 14p amplifies the difference between the detected DC voltage and the reference voltage output from a reference voltage setting circuit 12p. The output of the voltage difference amplifier 14p denotes the difference voltage of the reference voltage and the DC voltage.

A full-wave rectification wave detection circuit 25p then detects and outputs the full-wave rectification wave from the positive electrode of the bridge rectifier circuit 21p. A multiplier 26p multiplies this full-wave rectification wave and the difference voltage output of the voltage difference amplifier 14p. The product of this operation is a signal with a waveform similar to the full-wave rectification wave and the amplitude of the difference voltage, and denotes the target reactor current of the reactor current passing through the DC reactor 18p.

A current difference amplifier 23p amplifies the difference between the reactor current detected by the current detection circuit 17p and the target reactor current, and outputs a difference signal. A comparator 15p then compares the difference signal from the current difference amplifier 23p with the triangular wave or sawtooth wave output from a carrier wave oscillator 13p, and outputs a switch driving circuit with a PWM waveform. The switch 22p switches in a PWM mode based on the switch driving circuit.

As the difference signal of the current difference amplifier 23p rises, the high level period of the switch driving signal becomes longer and the on period of the switch 22p becomes longer. The reactor current therefore rises and the difference to the target reactor current decreases. More specifically, the detected DC current gradually goes to the reference voltage, and the waveform of the reactor current gradually approaches the full-wave rectification wave. This control method enables holding the DC voltage at the desired level and enables improving the input power factor by controlling the input AC current to a sine wave of the same phase as the input AC voltage.

When the switch 22p is on, the reactor current passes through three semiconductor devices, that is, two diodes in the bridge rectifier circuit 21 p and the switch 22p. The reactor current likewise passes through three semiconductor device when the switch 22p is off, that is, two diodes in the bridge rectifier circuit 21 p and the reverse-current prevention diode 19p. With the configuration shown in FIG. 8, power loss constantly occurs at three semiconductor devices.

A high frequency switching DC power supply device in which there are two switches and the number of semiconductor devices through which current passes is two is taught in Japanese Laid-open Patent Publication H1-117658 (see FIG. 1), for example. In this configuration the switches operate alternately each half cycle as step-up choppers according to the polarity of the AC input supply. This helps reduce power loss and improves the input power factor by supplying a sine wave input current.

However, the high frequency switching DC power supply device having a single transistor according to the related art described above requires a current detection circuit 17p in order to detect the reactor current, and requires a multiplier 26p and current difference amplifier 23p. In addition, because the DC power supply device of the related art is configured to simultaneously control the DC voltage and reactor current waveform, the target reactor current decreases when the difference voltage output of the voltage difference amplifier 14p decreases, and error is easily introduced to reactor current waveform control. To cope with this, a circuit that compares the output of the DC voltage detection circuit 11p with a target value, and controls the reference voltage of the reference voltage setting circuit 12p so that the result of the comparison goes to zero, must be added to the configuration shown in FIG. 9.

In addition, in order to control both the DC voltage and the reactor current waveform, not only is the circuit described above required, but the control algorithm of the control circuit 20p for optimally controlling both becomes complex. In addition, power loss is high because the current passes through three semiconductor devices as described above. Heat dissipation also becomes a problem because power loss is concentrated at the switch, and achieving high capacity DC output power, that is, high power output, is difficult.

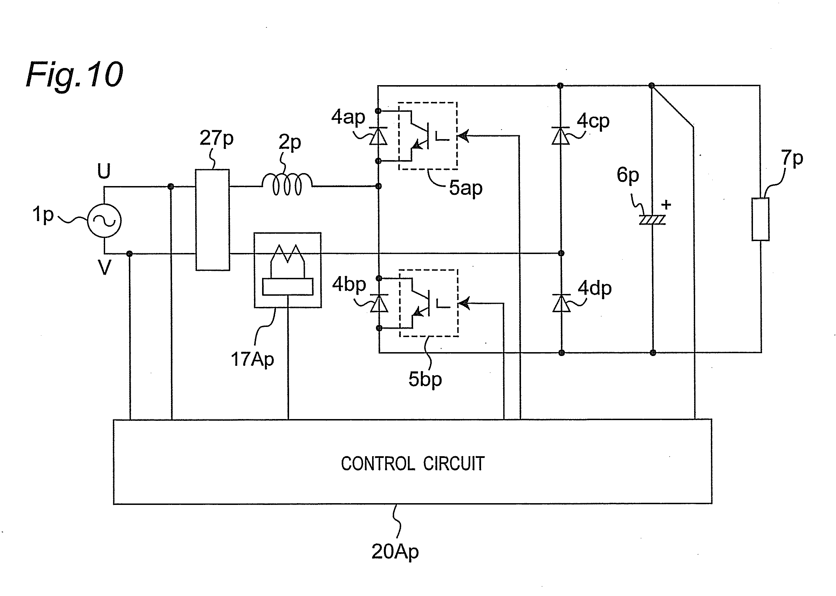

An advantage of the high frequency switching DC power supply device with two semiconductor devices as described above is that power loss equivalent to one semiconductor device can be reduced compared with the single device design described above. However, the basic configuration of the control circuit 20ap (see FIG. 10) is the same as the control circuit 20p shown in FIG. 8, the hardware configuration is larger, and the control algorithm is more complex.

With the single device design shown in FIG. 8 and FIG. 9, the positive electrode voltage of the smoothing capacitor 6p, the positive electrode output of the bridge rectifier circuit 21 p, and the output of the current detection circuit 17p are input to the control circuit 20p, which outputs the switch driving signal to the switch 22p. These four signals, including three inputs and one output, can set the emitter potential of the switch 22p to a common reference potential. With the two semiconductor device design shown in FIG. 10, however, AC signals such as the end voltages of the AC power supply 1 p and the output of the current detection circuit 17Ap are input to the control circuit 20Ap. In addition, the control circuit 20Ap also inputs and outputs DC signals such as the switch driving signals to the switch devices 5ap and 5bp and the positive voltage of the smoothing capacitor 6p. In this configuration AC signals must be processed insulated from the DC signals. Because detection of the output of the current detection circuit 17Ap is insulated from the AC channel, a common reference potential can be set for the DC signals, but the end voltages of the AC power supply 1p require an input voltage detection configuration including an insulating transformer, for example. As a result, the control circuit 20Ap becomes even more complex and expensive.

DISCLOSURE OF THE INVENTION

To solve the foregoing problem, an object of the present invention is to reduce power loss by using a two switch configuration while also reducing the cost by simplifying the hardware configuration of the control circuit for a two switch configuration according to the related art.

To achieve the foregoing object, a first aspect of the invention is a direct current power supply device having a rectifier unit that has first and second diodes and first and second switch units respectively connected parallel in reverse conduction direction to the first and second diodes, rectifies alternating current from an AC power source, and generates a rectified voltage; a reactor unit that has one reactor and is inserted between the AC power source and first and second AC input terminals of the rectifier unit; a smoothing unit that is connected to the positive and negative rectification output terminals of the rectifier unit, smooths the rectified voltage, and generates a DC voltage with the voltage of a substantially direct current; a target DC voltage setting unit that sets a target DC voltage denoting a target value for the DC voltage; and a control unit that generates a control signal having a pulse signal with a pulse width that changes according to a difference voltage of the target DC voltage and the DC voltage and a pulse period that is shorter than the basic period of the alternating current. The first and second switch units change the path of the current flowing to the reactor unit between first and second paths by switching according to the control signal and execute a step-up chopper operation.

Another aspect of the invention is an air conditioner having the direct current power supply device described above.

The direct current power supply device and the air conditioner having a direct current power supply device according to the present invention can also be described as follow.

A direct current power supply device according to the present invention has a rectifier unit composed of four diodes, two switch devices respectively parallel connected to two series-connected diodes in the group of four diodes, a reactor connected in series to the input side of the rectifier unit, a smoothing capacitor that smoothes the DC output of the rectifier unit, a DC voltage detection unit that detects the voltage of the smoothing capacitor, two photocouplers that output signals according to the polarity of the input voltage to the rectifier unit, a resistance that limits the current flowing to the photocouplers, a carrier wave oscillation unit that outputs a carrier wave, a target DC voltage setting unit that outputs a predetermined target DC voltage, and a switch control unit that outputs switch device control signals according to the output signals from the photocouplers, the carrier wave, the predetermined target DC voltage, and the DC voltage detected by the DC voltage detection unit.

A direct current power supply device according to another aspect of the invention has a rectifier unit composed of four diodes, two switch devices respectively parallel connected to two series-connected diodes in the group of four diodes, a reactor connected in series to the input side of the rectifier unit, a smoothing capacitor that smoothes the DC output of the rectifier unit, a DC voltage detection unit that detects the voltage of the smoothing capacitor, a photocoupler that outputs a signal according to the polarity of the input voltage to the rectifier unit, a delay unit that delays the signal from the photocoupler, a protection diode connected in parallel or in series to the photocoupler, a resistance that limits the current flowing to the photocoupler, a carrier wave oscillation unit that outputs a carrier wave, a target DC voltage setting unit that outputs a predetermined target DC voltage, and a switch control unit that outputs switch device control signals according to the output signal from the photocoupler, the output of the delay unit, the carrier wave, the predetermined target DC voltage, and the DC voltage detected by the DC voltage detection unit.

A direct current power supply device according to another aspect of the invention has a voltage doubler rectifier unit composed of two diodes and two capacitors, two switch devices parallel connected respectively to the two diodes, a reactor that is series connected to the input side of the voltage doubler rectifier unit, a DC voltage detection unit that detects the output voltage of the voltage doubler rectifier unit, two photocouplers that output signals according to the polarity of the voltage of the AC power source, a resistance that limits the current flowing to the photocouplers, a carrier wave oscillation unit that outputs a carrier wave, a target DC voltage setting unit that outputs a predetermined target DC voltage, and a switch control unit that outputs switch device control signals according to the output signals from the photocouplers, the carrier wave, the predetermined target DC voltage, and the DC voltage detected by the DC voltage detection unit.

A direct current power supply device according to another aspect of the invention has a voltage doubler rectifier unit composed of two diodes and two capacitors, two switch devices parallel connected respectively to the two diodes, a reactor that is series connected to the input side of the voltage doubler rectifier unit, a DC voltage detection unit that detects the output voltage of the voltage doubler rectifier unit, a photocoupler that outputs a signal according to the polarity of the voltage of the AC power source, a delay unit that delays the signal from the photocoupler, a protection diode connected in parallel or in series to the photocoupler, a resistance that limits the current flowing to the photocoupler, a carrier wave oscillation unit that outputs a carrier wave, a target DC voltage setting unit that outputs a desirable target DC voltage, and a switch control unit that outputs switch device control signals according to the output signal from the photocoupler, the output of the delay unit, the carrier wave, the predetermined target DC voltage, and the DC voltage detected by the DC voltage detection unit.

A direct current power supply device according to another aspect of the invention has a bridge rectification circuit unit composed of four diodes, a reactor connected in series to the input side of the bridge rectification circuit unit, a smoothing capacitor that smoothes the DC output of the bridge rectification circuit unit, a DC voltage detection means unit that detects the voltage of the smoothing capacitor, a carrier wave oscillator unit that outputs a carrier wave, a target DC voltage setting means unit that outputs a predetermined reference target DC voltage, a bidirectional switch having two switching devices connected in series in opposite directions and two reverse conduction diodes respectively connected in parallel to the two switching devices, and a switch control drive means unit that outputs drive control signals for the switching devices, the bidirectional switch being connected between the AC input terminals of the bridge rectification circuit unit.

The direct current power supply device and an air conditioner having the direct current power supply device of the invention enable rendering two high frequency switching DC power supply devices with a simple control unit configuration, improving the input power factor and reducing harmonic current with low power loss while also enabling reducing the size and cost of the control unit.

Other objects and attainments together with a fuller understanding of the invention will become apparent and appreciated by referring to the following description and claims taken in conjunction with the accompanying drawings.

BRIEF DESCRIPTION OF THE DRAWINGS

FIG. 1 is a block diagram of a DC power supply device according to a first embodiment of the invention.
FIG. 2A is a block diagram of a switch control unit in a first embodiment of the invention.
FIG. 2B is a block diagram of a switch control unit in a fourth embodiment of the invention.
FIG. 3A is a waveform diagram for selected parts of the DC power supply device according to a first embodiment of the invention.
FIG. 3B is an enlarged waveform diagram for selected signals in the DC power supply device according to the first embodiment of the invention.
FIG. 3C is a table showing the signal states at selected parts of the DC power supply device according to the first embodiment of the invention.
FIG. 4 is a block diagram of a DC power supply device according to a second embodiment of the invention.
FIG. 5 is a block diagram of a DC power supply device according to a third embodiment of the invention.
FIG. 6 is a block diagram of a DC power supply device according to a third embodiment of the invention.
FIG. 7 is a block diagram of a DC power supply device according to a fourth embodiment of the invention.

FIG. 8 is a block diagram of a DC power supply device according to the related art.
FIG. 9 is a block diagram of the control circuit in a DC power supply device according to the related art.
FIG. 10 is a block diagram of another DC power supply device according to the related art.

DETAILED DESCRIPTION OF THE PREFERRED EMBODIMENTS

A first aspect of the invention has a rectifier unit composed of four diodes, two switch devices respectively parallel connected to two series-connected diodes in the group of four diodes, a reactor connected in series to the input side of the rectifier unit, a smoothing capacitor that smoothes the DC output of the rectifier unit, a DC voltage detection unit that detects the voltage of the smoothing capacitor, two photocouplers that output signals according to the polarity of the input voltage to the rectifier unit, a resistance that limits the current flowing to the photocouplers, a carrier wave oscillation unit that outputs a carrier wave, a target DC voltage setting unit that outputs a predetermined target DC voltage, and a switch control unit that outputs switch device control signals according to the output signals from the photocouplers, the carrier wave, the predetermined target DC voltage, and the DC voltage detected by the DC voltage detection unit.

This aspect of the invention enables improving the input power factor and reducing harmonic current while suppressing power loss. In addition, a current detection unit for detecting the reactor current is not included, and a multiplier is not contained in the switch control unit. In addition, because the input voltage is detected using two photocouplers, the AC polarity detection unit can be simplified and device size and cost can be reduced by reducing the parts count.

A second aspect of the invention has a rectifier unit composed of four diodes, two switch devices respectively parallel connected to two series-connected diodes in the group of four diodes, a reactor connected in series to the input side of the rectifier unit, a smoothing capacitor that smoothes the DC output of the rectifier unit, a DC voltage detection unit that detects the voltage of the smoothing capacitor, a photocoupler that outputs a signal according to the polarity of the input voltage to the rectifier unit, a delay unit that delays the signal from the photocoupler, a protection diode connected in parallel or in series to the photocoupler, a resistance that limits the current flowing to the photocoupler, a carrier wave oscillation unit that outputs a carrier wave, a target DC voltage setting unit that outputs a predetermined target DC voltage, and a switch control unit that outputs switch device control signals according to the output signal from the photocoupler, the output of the delay unit, the carrier wave, the predetermined target DC voltage, and the DC voltage detected by the DC voltage detection unit.

This aspect of the invention enables improving the input power factor, reducing harmonic current, and reducing cost while suppressing power loss.

A third aspect of the invention has a voltage doubler rectifier unit composed of two diodes and two capacitors, two switch devices parallel connected respectively to the two diodes, a reactor that is series connected to the input side of the voltage doubler rectifier unit, a DC voltage detection unit that detects the output voltage of the voltage doubler rectifier unit, two photocouplers that output signals according to the polarity of the voltage of the AC power source, a resistance that limits the current flowing to the photocouplers, a carrier wave oscillation unit that outputs a carrier wave, a target DC voltage setting unit that outputs a predetermined target DC voltage, and a switch control unit that outputs switch device control signals according to the output signals from the photocouplers, the carrier wave, the predetermined target DC voltage, and the DC voltage detected by the DC voltage detection unit.

In addition to the effects of the first aspect of the invention described above, this aspect of the invention enables easily boosting the DC voltage, reducing power loss at the diodes, and regenerating power on the AC power source side.

A fourth aspect of the invention has a voltage doubler rectifier unit composed of two diodes and two capacitors, two switch devices parallel connected respectively to the two diodes, a reactor that is series connected to the input side of the voltage doubler rectifier unit, a DC voltage detection unit that detects the output voltage of the voltage doubler rectifier unit, a photocoupler that outputs a signal according to the polarity of the voltage of the AC power source, a delay unit that delays the signal from the photocoupler, a protection diode connected in parallel or in series to the photocoupler, a resistance that limits the current flowing to the photocoupler, a carrier wave oscillation unit that outputs a carrier wave, a target DC voltage setting unit that outputs a desirable target DC voltage, and a switch control unit that outputs switch device control signals according to the output signal from the photocoupler, the output of the delay unit, the carrier wave, the predetermined target DC voltage, and the DC voltage detected by the DC voltage detection unit.

This aspect of the invention enables improving the input power factor, reducing harmonic current, and reducing cost while suppressing power loss.

A fifth aspect of the invention is the first or second aspect of the invention in which the two switch devices are parallel connected respectively to the two diodes connected to the negative polarity side of the smoothing capacitor. This configuration enables handling the control signals of the two switch devices referenced to the common ground potential of the control unit, and enables simplifying the switch control unit and reducing the cost.

A sixth aspect of the invention is the fifth aspect of the invention in which the rectifier unit has a reactor connected in series to two input terminals. This aspect of the invention enables reducing transmission of common mode potential fluctuations to the AC power source side, and enables reducing the number of noise reduction parts.

A seventh aspect of the invention has a rectifier unit composed of four diodes, a reactor connected in series to the input side of the rectifier unit, a smoothing capacitor that smoothes the DC output of the rectifier unit, a DC voltage detection unit that detects the voltage of the smoothing capacitor, a carrier wave oscillation unit that outputs a carrier wave, a target DC voltage setting unit that outputs a predetermined target DC voltage, a bidirectional switch having two switch devices connected in series in opposite directions and two reverse conduction diodes respectively connected in parallel to the two switch devices, and a switch control unit that outputs switch device control signals, the bidirectional switch being connected between the AC input terminals of the rectifier unit.

While reducing power loss as described in the first to fourth aspects of the invention described above, this aspect of the invention can also reduce the number of photocouplers that output signals according to the polarity of the voltage of the AC power source and the resistances limiting the current flowing to the photocouplers, and can thus be rendered by an even simpler configuration.

An eighth aspect of the invention is any of the first to seventh aspects of the invention wherein the switch control unit limits the maximum on time of the two switch devices. As a result, distortion of the current wave under heavy load conditions can be suppressed, and overcurrent flow to the switch can be prevented.

A ninth aspect of the invention is the eighth aspect of the invention in which the switch control unit changes the limit of the maximum on time of the two switch devices according to the phase of the input voltage, and sets the maximum on time short in a phase with a high input voltage. This aspect of the invention enables limiting the maximum current flow to the reactor, and enables using a smaller reactor.

A tenth aspect of the invention is any of the first to ninth aspects of the invention wherein the switch control unit increases the DC voltage used as the target as the load increases, and thus increases the sine wave control range of the input current. As a result, the range in which the input current is controlled to a sine wave can be increased, and a high performance device can be achieved.

Preferred embodiments of the present invention are described below with reference to the accompanying figures. Note that parts with the same configuration, operation, and effect are denoted by the same reference numerals in the accompanying figures. The numbers used below and in the figures are also merely to describe a specific embodiment of the invention, and the invention is not limited to these numbers. In addition, logic levels denoted high and low herein are only used by way of example to describe a specific embodiment of the invention, and it will be obvious that the same effect can be achieved using different combinations of the logic levels. Furthermore, the connections between particular parts described below are also used to describe a specific embodiment of the invention, and the connections achieving the function of the invention are not limited to those described below. The following embodiments are also rendering using hardware and/or software elements, but the hardware configurations described below can also be achieved using software, and the software configurations described below can also be achieved using hardware.

Embodiment 1

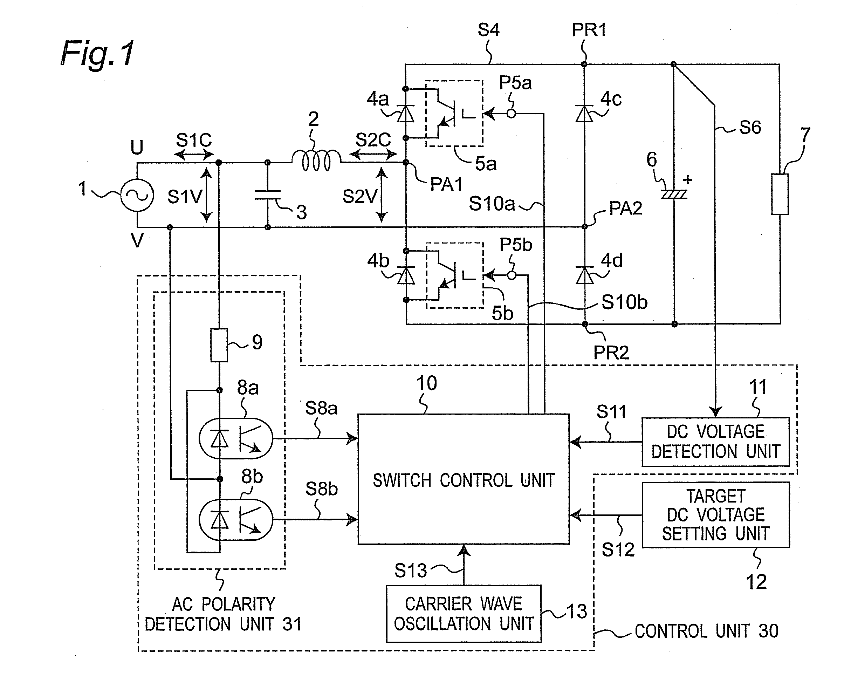

FIG. 1 is a block diagram of a DC power supply device according to a first embodiment of the invention.

The DC power supply device shown in FIG. 1 has an AC power source 1, a filter capacitor 3, a reactor 2, switch devices 5a and 5b, diodes 4a, 4b, 4c, 4d, a smoothing capacitor 6, a load 7, a control unit 30, and a target DC voltage setting unit 12. The control unit 30 includes an AC polarity detection unit 31, a carrier wave oscillation unit 13, a DC voltage detection unit 11, and a switch control unit 10.

The AC polarity detection unit 31 includes photocouplers 8a and 8b, and a current limiting resistance 9. The reactor 2 is contained in a reactor unit. The switch devices 5a and 5b and diodes 4a, 4b, 4c, 4d are included in a rectifier unit. The smoothing capacitor 6 is included in a smoothing unit. The smoothing unit is not limited to a capacitor, and may include an inductor or other devices.

The switch devices 5a and 5b are switch devices such as bipolar transistors, metal oxide semiconductor (MOS) transistors, or insulated gate bipolar transistors (IGBT). The switch devices 5a and 5b may be rendered by means of a single switch device, or a combination of plural switch devices. As a result, the switch devices 5a and 5b may also be referred to as switch units.

The AC power source 1 produces AC voltage S1V and AC current S1C between power supply terminal U and power supply terminal V. When the potential of power supply terminal U is higher than the potential of power supply terminal V, AC voltage S1V is a positive voltage, but when the potential of power supply terminal U is lower than the potential of power supply terminal V, AC voltage S 1 V is negative.

The filter capacitor 3 is connected parallel to the AC power source 1. The reactor 2 is connected in series to the AC power source 1 so that one terminal is connected to the AC input terminal PA1. The filter capacitor 3 and reactor 2 suppress an increase in harmonic distortion of the AC voltage S1V as a result of harmonic current from another device connected in parallel to the AC power source 1. The filter capacitor 3 and reactor 2 also suppress an increase in the high frequency distortion of the AC current S1C, that is, the harmonic current of the DC power supply device, caused by the high frequency distortion produced by the DC power supply device according to the first embodiment of the invention.

The reactor current S2C flows to the reactor 2, and the AC voltage S2V appears at the AC input terminals PA1 and PA2. Because the internal impedance of the AC power source 1 is normally sufficiently low, the AC voltage S2V is substantially equal to the AC voltage S1V except for the phase. The reactor unit is inserted between the AC power source 1 and the AC input terminals PA1 and PA2.

In the rectifier unit the anode of diode 4a and the cathode of diode 4b are connected to AC input terminal PA1, and the anode of diode 4c and the cathode of diode 4d are connected to AC input terminal PA2. The cathodes of both diode 4a and diode 4c are connected to positive rectification output terminal PR1, and the anodes of both diode 4b and diode 4d are connected to negative rectification output terminal PR2. The switch device 5a is parallel connected to diode 4a with the conduction direction reversed, and switch device 5b is parallel connected to diode 4b with the conduction direction reversed. The rectifier unit full-wave rectifies the AC voltage S2V from AC input terminals PA1 and PA2, and produces rectified voltage S4 at rectified output terminals PR1 and PR2.

The smoothing capacitor 6 is parallel connected to the rectified output terminals PR1 and PR2, smooths rectified voltage S4, and produces DC voltage S6 with the voltage of a substantially direct current. The rectified voltage S4 and DC voltage S6 are equal in this first embodiment of the invention. The load 7 is parallel connected to the smoothing capacitor 6, and DC voltage S6 is applied thereto.

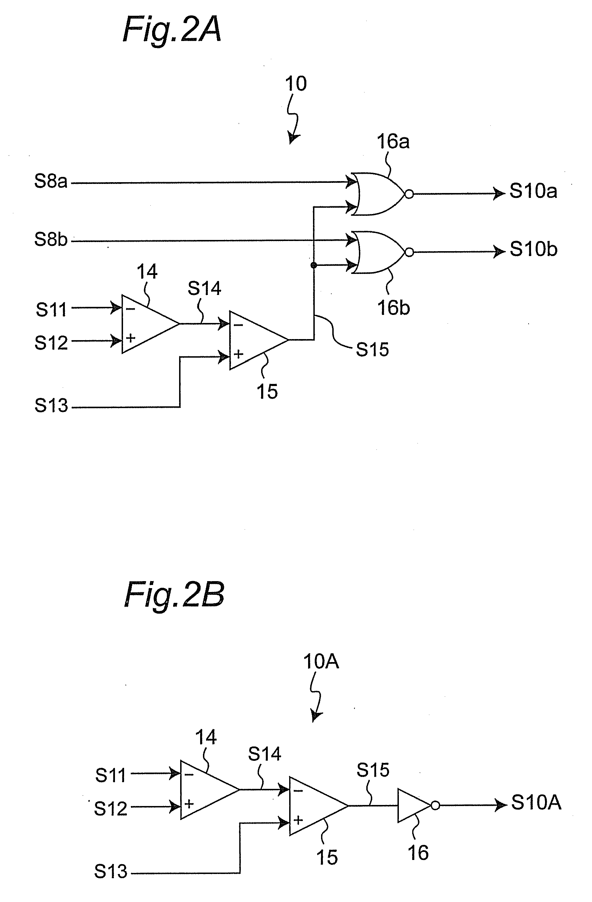

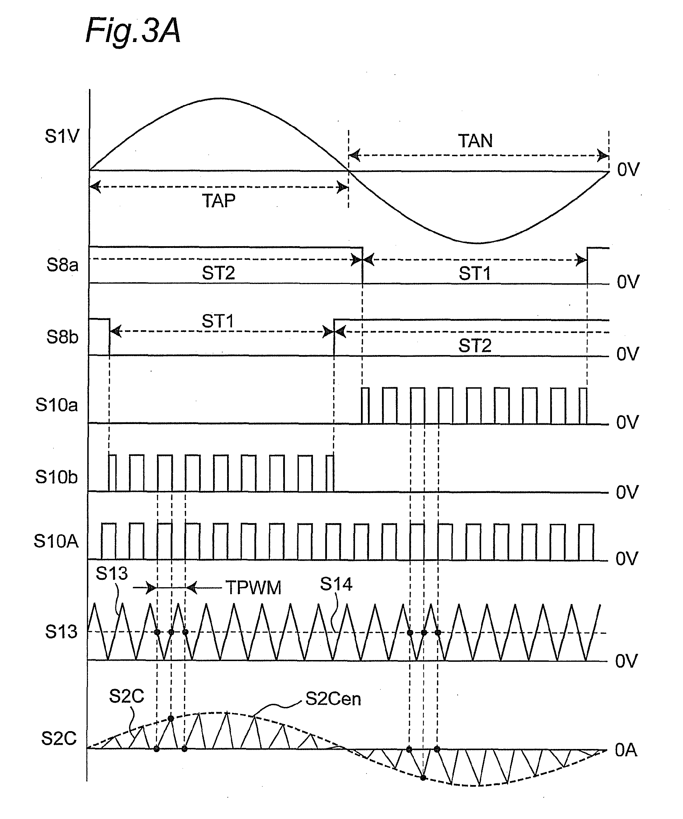

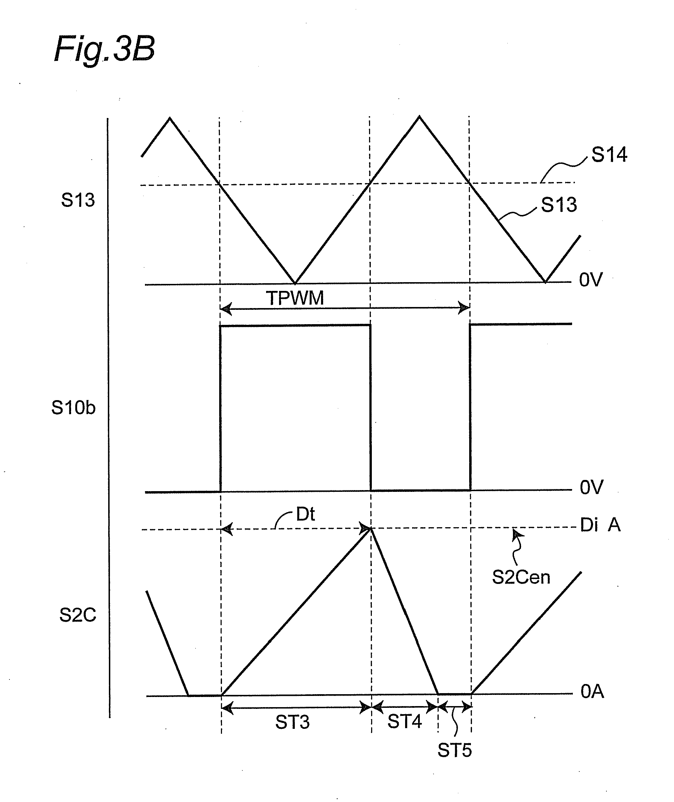

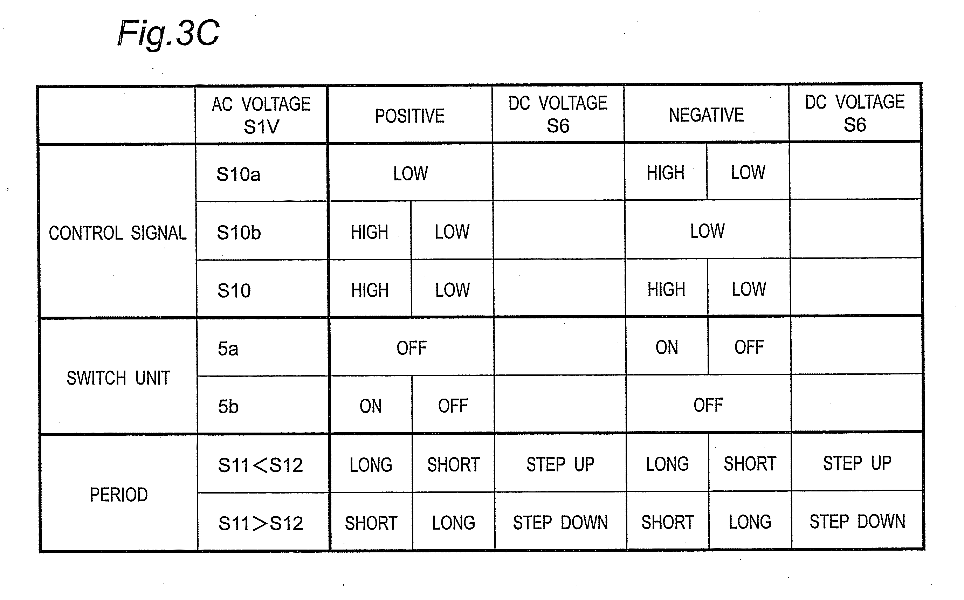

FIG. 2A is a block diagram showing the circuit configuration of the switch control unit 10 in the first embodiment of the invention. FIG. 3A is a waveform diagram showing the signal waveforms of various parts of the DC power supply device according to the first embodiment of the invention, and FIG. 3B is an enlarged view of parts of FIG. 3A. FIG. 3C describes the signal states of parts of the DC power supply device according to the first embodiment of the invention. The operation of a DC power supply device according to the first embodiment of the invention is described below focusing on the control unit 30 with reference to FIG. 1, FIG. 2A, FIG. 3A, FIG. 3B, and FIG. 3C.

In the AC polarity detection unit 31 the cathode of the photocoupler 8a and the anode of the photocoupler 8b are connected through resistance 9 to power supply terminal U, and the anode of the photocoupler 8a and the cathode of the photocoupler 8b are connected to the power supply terminal V. The AC polarity detection unit 31 detects the polarity of the AC voltage S1V using photocouplers 8a and 8b, and generates AC polarity signals S8a and S8b denoting the output logic state of the photocouplers 8a and 8b, respectively.

The AC cycle is the basic cycle of the AC voltage S1V, and is the reciprocal of 50 Hz or 60 Hz, for example. The AC half cycle is half the AC cycle. The period of the AC cycle when the AC voltage S1V is positive is called the positive AC period TAP, and the period of the AC cycle when the AC voltage S1V is negative is called the negative AC period TAN (see FIG. 3A).

In the positive AC period TAP the AC polarity signal S8b is low because the photocoupler 8b is on, and the AC polarity signal S8a is high because the photocoupler 8a is off. However, in the negative AC period TAN, the AC polarity signal S8a is low because the photocoupler 8a is on, and the AC polarity signal S8b is high because the photocoupler 8b is off. While the AC polarity signals S8a and S8b are low, that is, during the low period, the AC half cycle becomes shorter because the on voltage of the photocoupler is zero. When these signals are high, however, that is, during the high period, the AC half cycle becomes longer.

As further described below, the switch devices 5a and 5b are in a switchable state ST1 denoting that switching is possible during the low period of the AC polarity signals S8a and S8b. During the high period of the AC polarity signals S8a and S8b, however, the switch devices 5a and 5b are in a no-switching state ST2 in which switching is disabled. For example, if photocoupler 8b is omitted, the output of the AC polarity detection unit 31 is only AC polarity signal S8a, and the periods when the switch devices 5a and 5b are in the switchable state ST1 are mutually different. Therefore, by using two photocouplers 8a and 8b, the periods when the switch devices 5a and 5b are in the switchable state ST1 can be made substantially equal. As a result, the AC current S1C is symmetrically positive and negative and the even distortion produced in the AC current S1C can be reduced. In addition, because the periods of the switchable state ST1 do not mutually overlap on the time base, simultaneously turning the switch devices 5a and 5b on can be avoided, and producing a short current can be prevented. Note that because only the polarity and not the whole wave of the AC voltage S1V is used in the control unit 30, an easily insulated detection configuration such as the photocouplers 8a and 8b can be used.

The DC voltage detection unit 11 detects the DC voltage S6 and outputs a DC voltage signal S11 denoting the voltage level of the DC voltage S6. The DC voltage detection unit 11 is, for example, a high impedance input/low impedance output buffer circuit. The target DC voltage setting unit 12 sets the target DC voltage that will be the target value for the DC voltage S6, and produces a target DC voltage signal S12 denoting the voltage level of the target DC voltage. The carrier wave oscillation unit 13 generates a carrier wave signal S13 with a period TPWM shorter than the AC cycle. The carrier wave period TPWM is set, for example, to 1/400 or less of the AC cycle. The carrier wave signal S13 is a repeating signal with the waveform of a triangular wave or sawtooth wave. The switch control unit 10 generates control signals S10a and S10b based on the target DC voltage signal S12, carrier wave signal S13, and AC polarity signals S8a and S8b.

In FIG. 2A the switch control unit 10 includes a difference voltage detection unit 14, a comparison unit 15, and NOR gate units 16a, 16b. Based on the target DC voltage signal S12 and DC voltage signal S11, the difference voltage detection unit 14 detects a difference voltage of the target DC voltage minus the DC voltage S6, and outputs a difference voltage signal S14.

The comparison unit 15 compares the carrier wave signal S13 and difference voltage signal S14, and produces comparison result signal S15. The comparison result signal S15 is high when the carrier wave signal S13 is greater than or equal to the difference voltage signal S14, and is low when the carrier wave signal S13 is less than the difference voltage signal S14.

The NOR gate unit 16a generates a control signal S10a denoting the NOT-OR of the AC polarity signal S8a and comparison result signal S15, and the NOR gate unit 16b generates a control signal S10b denoting the NOT-OR of the AC polarity signal S8b and the comparison result signal S15.

As shown in FIG. 3A, FIG. 3B, and FIG. 3C, the control signals S10a and S10b are low irrespective of the comparison result signal S15 in the high periods of the AC polarity signals S8a and S8b. When the AC polarity signals S8a and S8b are low, the control signals S10a and S10b go low if the carrier wave signal S13 is greater than or equal to the difference voltage signal S14, and go high if the carrier wave signal S13 is less than the difference voltage signal S14. More specifically, the control signals S10a and S10b are pulse signals with a pulse period equal to the period TPWM and a pulse width that changes according to the difference voltage between the target DC voltage and the DC voltage S6 in the low period of the AC polarity signals S8a and S8b, respectively. The control signals S10a and S10b are signals that are pulse width modulated (PWM: pulse code modulation) according to the difference voltage between the target DC voltage and the DC voltage S6.

When the DC voltage S6 (that is, the DC voltage signal S11) is less than the target DC voltage (that is, the target DC voltage signal S12), the high period of the control signals S10a and S10b becomes longer and the low period becomes shorter, and the pulse width therefore becomes longer. However, when the DC voltage S6 is higher than the target DC voltage, the high period of the control signals S10a and S10b becomes shorter and the low period becomes longer, and the pulse width therefore becomes shorter. Because the DC voltage S6 changes at a sufficiently slow speed, the difference voltage signal S14 is substantially constant during the AC cycle as shown in FIG. 3A. Therefore, the pulse width of the control signals S10a and S10b is substantially constant during the AC cycle.

The switch devices 5a and 5b switch according to the control signals S10a and S10b. More specifically, the switch devices 5a and 5b have both a switchable state ST1 and a no-switching state ST2 every AC cycle, and switch in the switchable state ST1. When either of the switch devices 5a and 5b is in the switchable state ST1, the other is in the no-switching state ST2. In this first embodiment of the invention the length of the switchable state ST1 is shorter than the no-switching state ST2. The switch devices 5a and 5b go on in the switchable state ST1 if the corresponding control signals S10a and S10b are high, and go off if low. If the DC voltage S6 is lower than the target DC voltage, the on period gets longer, and if the DC voltage S6 is higher than the target DC voltage, the on period becomes shorter.

The path of the reactor current S2C is described next. For purposes of this description the impedance of the load 7 is set sufficiently high, and the current flowing through the load 7 is ignored, but the same description may apply when the impedance is low.

First, in the positive AC period TAP the switch device 5a is always off. When the switch device 5b is on, the reactor current S2C flows substantially sequentially from the reactor 2 through the AC input terminal PA1, switch device 5b, negative rectification output terminal PR2, diode 4d, AC input terminal PA2, and AC power source 1. This path is called the storage path. There are two active devices on the storage path, the switch device 5b and the diode 4d.

When the switch device 5b is off, the reactor current S2C flows substantially sequentially from the reactor 2 through the AC input terminal PA1, diode 4a, positive rectification output terminal PR1, smoothing capacitor 6, negative rectification output terminal PR2, diode 4d, AC input terminal PA2, and the AC power source 1. This path is called the discharge path. There are two active devices on the discharge path, diode 4a and diode 4d.

Next, in the negative AC period TAN the switch device 5b is always off. When the switch device 5a is on, the reactor current S2C flows substantially sequentially through the storage path from the reactor 2 to the AC power source 1, AC input terminal PA2, diode 4c, positive rectification output terminal PR1, switch device 5a, and the AC input terminal PA1. There are two active devices on the storage path, the diode 4c and switch device 5a.

When the switch device 5a is off, the reactor current S2C flows substantially sequentially through the discharge path from the reactor 2 to the AC power source 1, AC input terminal PA2, diode 4c, positive rectification output terminal PR1, smoothing capacitor 6, negative rectification output terminal PR2, diode 4b, and the AC input terminal PA1. There are two active devices on the discharge path, the diode 4c and the diode 4b.

The reactor 2, rectifier unit, and smoothing capacitor 6 render a step-up chopper circuit. During the positive AC period TAP, the reactor current S2C flows through the storage path while increasing gradually based on the AC voltage S1V while the switch device 5b is on, and electromagnetic energy is gradually stored. When the switch device 5b is then off, the reactor current S2C flows through the discharge path while decreasing gradually based on the sum of the AC voltage S1V and the end voltages of the reactor 2, the electromagnetic energy of the reactor 2 gradually discharges, and is charged forward in the smoothing capacitor 6. The diode 4a prevents reverse current during the step-up chopper operation while the switch device 5b is on, and when the switch device 5b is off passes the reactor current S2C in the conduction direction.

Likewise during the negative AC period TAN, when the switch device 5a is on, the reactor current S2C flows through the storage path while increasing gradually based on the AC voltage S1V, and gradually stores electromagnetic energy in the reactor 2. When the switch device 5a is then off, the reactor current S2C flows through the discharge path while gradually decreasing based on the sum of the AC voltage S1V and both end voltages of the reactor 2, gradually discharges the electromagnetic energy of the reactor 2 and charges the smoothing capacitor 6 forward. The diode 4c prevents reverse current during the step-up chopper operation when the switch device 5a is on, and when the switch device 5a is off passes the reactor current S2C in the conduction direction.

By thus switching respectively based on the control signals S10a and S10b, the switch devices 5a and 5b alternately change the storage path and discharge path of the reactor current S2C, and the rectifying operation and step-up chopper operation occur simultaneously. As a result, the DC power supply device according to the first embodiment of the invention simultaneously steps up while rectifying and smoothing the AC voltage S1V, and generates DC voltage S6.

As shown in FIG. 3B, the state in which the reactor current S2C increases gradually and electromagnetic energy is gradually stored in the reactor 2 is called the storage state ST3. The state in which the reactor current S2C gradually decreases and electromagnetic energy is gradually discharged is called the discharge state ST4. The state in which the reactor current S2C and electromagnetic energy are substantially zero after the discharge state ST4 and until the next storage state ST3 starts is called the inactive state ST5. In each pulse period TPWM of the switchable state ST1 the reactor current S2C goes through these three states in the sequence storage state ST3, discharge state ST4, and inactive state ST5.

Note that for purposes of illustration in FIG. 3A and FIG. 3B, the reactor current S2C is shown as though it changes linearly in the storage state ST3 and discharge state ST4. It will be obvious, however, that in practice the reactor current S2C changes in an exponential function manner on the storage path and the discharge path, first abruptly and then more gradually over time based on the inductance and the resistance of the reactor 2 and the resistance in the conduction direction of the active devices.

If the momentary value of the AC voltage S1V is V, the inductance of the reactor 2 is L, the momentary value of the reactor current S2C is i, and the passage of time is t, equation 1 below is true in the storage state ST3 because the voltage applied to the reactor 2 is substantially equal to V. More specifically, in the storage state ST3 the slope di/dt of the time change in the reactor current S2C is proportional to the momentary value V of the AC voltage S1V.

$$V = L * di/dt \qquad\qquad (1)$$

When the reactor current S2C changes linearly by change Di in period Dt of the storage state ST3 (see FIG. 3B), the change Di in the reactor current S2C is proportional to the momentary voltage V of the AC voltage S1V as shown in equation (2).

$$Di = V * Dt/L \qquad\qquad (2)$$

Change Di denotes the amount of increase in the positive AC period TAP, and in the negative AC period TAN denotes the amount of decrease.

It is assumed here that there is always a period in which the reactor current S2C is substantially zero, that is, an inactive state ST5 period. In this case, in all periods Dt that follow the reactor current S2C does not accumulate the change Di. More specifically, change Di denotes the change of the reactor current S2C from 0 (A) to Di (A) in every period Dt. As a result, the change Di is equal to the reactor current S2C level when the amplitude of the reactor current S2C is greatest in each pulse period TPWM, that is, is equal to the value of the envelope curve S2Cen (see FIG. 3A). Because period Dt of the storage state ST3 is equal to the pulse width of each control signal S10a and S10b, and this pulse width is substantially constant in the AC cycle as described above, the period Dt of the storage state ST3 is also substantially constant in the AC cycle. Therefore, the envelope curve S2Cen of the reactor current S2C is substantially proportional to the momentary value V of the AC voltage S1V and substantially identical to the waveform of the AC voltage S1V during the AC cycle.

As described above, when the DC voltage S6 (that is, DC voltage signal S11) is lower than the target DC voltage (that is, the target DC voltage signal S12), the on period of the switch devices 5a and 5b increases. Because the period Dt of the storage state ST3 becomes longer in this case and the slope Di/Dt of the reactor current S2C remains the same, the maximum level Di of the reactor current S2C increases as shown in equation (2). More specifically, the reactor current S2C remains a sine wave but the amplitude rises. As a result, the current charged in the smoothing capacitor 6 increases and the DC voltage S6 rises.

However, when the DC voltage S6 is higher than the target DC voltage, the on period of the switch devices 5a and 5b becomes shorter. Because the period Dt of the storage state ST3 becomes shorter in this case and the slope Di/Dt of the reactor current S2C remains the same, the peak level Di of the reactor current S2C decreases as shown in equation (2). More specifically, the reactor current S2C remains a sine wave but the amplitude drops. As a result, the current charged in the smoothing capacitor 6 decreases and the DC voltage S6 drops.

The DC power supply device according to the first embodiment of the invention thus works to make the DC voltage S6 track the target DC voltage.

The foregoing description of the embodiment presumes that the period of the inactive state ST5 does not go to zero. Because the storage state ST3 starts before the reactor current S2C goes to zero when the sum of the periods of the storage state ST3 and discharge state ST4 exceeds the pulse period, the absolute value of the envelope curve S2Cen of the reactor current S2C rises over time. To avoid this condition, the control unit 30 limits the pulse width of the control signals S10a and S10b in the pulse period to within a predetermined period. More specifically, in FIG. 2A, for example, a pulse width limiting unit is inserted between the comparison unit 15 and the NOR gate units 16a, 16b, and if the pulse width of the comparison result signal S15 exceeds the predetermined period, the pulse width limiting unit sets it to the predetermined period. Because the period of the discharge state ST4 is determined by the configuration of the path of the reactor current S2C, the inactive state ST5 can be prevented from going to zero if the period Dt of the storage state ST3 equal to the pulse width is limited to a predetermined period.

As described above, the input current harmonics are sufficiently low because the filter capacitor 3 removes the high frequency component of the reactor current. In addition, because the phase of the reactor current matches the phase of the AC voltage S1 V, the input power factor of the DC power supply device is improved.

As described above, the DC power supply device according to the first embodiment of the invention operates so that the waveform of the reactor current S2C substantially matches the waveform of the sine wave AC voltage S1V. As a result, the high frequency current output from the DC power supply device to the AC power source 1 side can be sufficiently kept less than the harmonic current limit. Furthermore, because the phase of the reactor current S2C substantially matches the phase of the AC voltage S1V, the input power factor can be improved. Yet further, the step-up chopper function can boost the DC voltage S6. In addition, because the number of active devices that the reactor current S2C passes can be limited to two and power loss can be reduced, the heat dissipation configuration is simplified and the capacity of the DC output power can be increased, that is, a high power output can be achieved.

The DC power supply device according to the first embodiment of the invention directly sets the pulse width of the control signals S10a and S10b based only on the difference voltage of the target DC voltage and the DC voltage S6, and the waveform of the reactor current S2C automatically follows the waveform of the AC voltage S1V. As a result, a configuration for detecting the waveform of the reactor current S2C and the waveform of the AC voltage S1V (or full-wave rectified voltage) as the target waveform of the reactor current S2C can be omitted. Therefore, an insulated detection configuration required to potentially relate the reactor current S2C and AC voltage S1V to the DC voltage S6 is unnecessary. In addition, a multiplier for calculating the target waveform of the reactor current S2C from the foregoing difference voltage and the AC voltage S1V as the target waveform, and a current difference amplifier for obtaining the difference between the calculated target waveform and the detected reactor current S2C, are unnecessary. Because the parts count is thus reduced, the cost and size of the DC power supply device according to the first embodiment of the invention can be reduced.

Furthermore, by disposing a pulse width limiting unit in the control unit 30 and limiting the pulse width of the control signals S10a and S10b to within a predetermined period, the waveform of the reactor current S2C can be made to reliably track the waveform of the AC voltage S1 V.

Note that while the first embodiment described above uses two photocouplers, only one may be used if it is used only to detect the polarity of the AC voltage S1V as described above. As a result, if a microprocessor is used, for example, the same effect can be achieved using a single photocoupler by providing a delay circuit to suitably select a setting so that the positive and negative photocoupler output voltages are symmetrical. In this configuration a protection diode is connected in parallel or in series to the photocoupler to prevent reverse bias input to the photocoupler.

Note that in the first embodiment the input AC current S1C can be shaped to a sine wave only when there is an inactive state ST5 in which the reactor current S2C goes to zero every time between when the switch devices 5a and 5b switch from off to on. As a result, overcurrent and other problems can be prevented by limiting the pulse width as described above so that the period of the inactive state ST5 does not go to zero. The peak reactor current S2C can also be suppressed by further shortening the maximum pulse width, and in this configuration the reactor 2 size can also be reduced.

The maximum pulse width can be changed according to the phase of the AC voltage S1V, the peak reactor current S2C can be limited, and the DC power supply capacity can be increased to further reduce the size of the reactor 2. More specifically, the maximum pulse width can be reduced near the peak AC voltage S1V, and the maximum pulse width can be increased in other phases. Because the effective input AC current S1C can be increased with substantially no drop in the power factor as a result, the DC power supply capacity can be increased.

The target DC voltage may also be changed according to the load 7 in order to increase the period of the inactive state ST5. When the DC voltage S6 is low, the period of the discharge state ST4 becomes longer and the operating range of the storage state ST3 in which the input AC current S1C can be controlled to a sine wave becomes narrower. Therefore, by increasing the target DC voltage as the load 7 rises, the current change rate of the drop in the reactor current S2C in the discharge state ST4 can be increased. As a result, the on period of each switch device 5a and 5b can be increased, and the operating range can be increased.

The first embodiment of the invention is configured so that the two switch devices 5a and 5b have a no-switching state ST2 substantially every half period of the AC cycle. However, a configuration in which the switch devices 5a and 5b are always in the switchable state ST1 and are alternately on is also conceivable. Such a configuration enables simplifying the bootstrap circuit that is most commonly used as the drive power supply of the switch device 5a connected to the positive terminal side, and the cost can be reduced. In addition, by using field effect transistors (FET) for the switch devices 5a and 5b, power loss can be further reduced using synchronous rectification.

Embodiment 2

The second embodiment of the invention is described below focusing on the differences from the first embodiment. Other aspects of the configuration, operation, and effect of this embodiment are the same as the first embodiment, and further description thereof is thus omitted.

FIG. 4 is a block diagram of a DC power supply device according to a second embodiment of the invention. In FIG. 4 the smoothing capacitor 6 shown in FIG. 1 is omitted, and smoothing capacitors 6a and 6b are connected in place of diodes 4c and 4d.

The path of the reactor current S2C is described next. For purposes of this description the impedance of the load 7 is set sufficiently high, and the current flowing through the load 7 is ignored, but the same description may apply when the impedance is low.

First, in the positive AC period TAP the switch device 5a is always off. When the switch device 5b is on, the reactor current S2C flows substantially sequentially through the storage path from the reactor 2 through the AC input terminal PA1, switch device 5b, negative rectification output terminal PR2, smoothing capacitor 6b, AC input terminal PA2, and AC power source 1. There is one active device on the storage path, the switch device 5b.

When the switch device 5b is off, the reactor current S2C flows substantially sequentially through the discharge path from the reactor 2 through the AC input terminal PA1, diode 4a, positive rectification output terminal PR1, smoothing capacitor 6a, AC input terminal PA2, and the AC power source 1. There is one active device on the discharge path, diode 4a.

The diode 4a prevents reverse current in the step-up chopper operation when the switch device 5b is on, and when the switch device 5b is off passes the reactor current S2C in the conduction direction.

Next, in the negative AC period TAN the switch device 5b is always off. When the switch device 5a is on, the reactor current S2C flows substantially sequentially through the storage path from the reactor 2 to the AC power source 1, AC input terminal PA2, smoothing capacitor 6a, positive rectification output terminal PR1, switch device 5a, and the AC input terminal PA1. There is one active device on the storage path, switch device 5a.

When the switch device 5a is off, the reactor current S2C flows substantially sequentially through the discharge path from the reactor 2 to the AC power source 1, AC input terminal PA2, smoothing capacitor 6b, negative rectification output terminal PR2, diode 4b, and the AC input terminal PA1. There is one active device on the discharge path, the diode 4b.

The diode 4b prevents reverse current in the step-up chopper operation when the switch device 5a is on, and when the switch device 5a is off passes the reactor current S2C in the conduction direction.

Other aspects of the configuration and operation of this embodiment are the same as the first embodiment, and the effect of this embodiment is also the same as the first embodiment. In addition, the DC power supply device according to this second embodiment of the invention has a voltage doubler rectifier design instead of the full-wave rectifier design of the first embodiment. Because the DC voltage S6 is controlled to twice or more the peak AC power supply voltage S1V, the DC power supply device according to the second embodiment can be used in applications requiring high voltage DC output.

When the DC voltage S6 is boosted above the target DC voltage, power cannot be regenerated at the AC power source 1 side in the first embodiment because the rectifier unit uses a four diode bridge configuration. However, because power regeneration is possible with the configuration of the second embodiment, the second embodiment can be effectively used with a motor as the load.

Embodiment 3

The third embodiment of the invention is described below focusing on the differences from the first embodiment. Other aspects of the configuration, operation, and effect of this embodiment are the same as the first embodiment, and further description thereof is thus omitted.

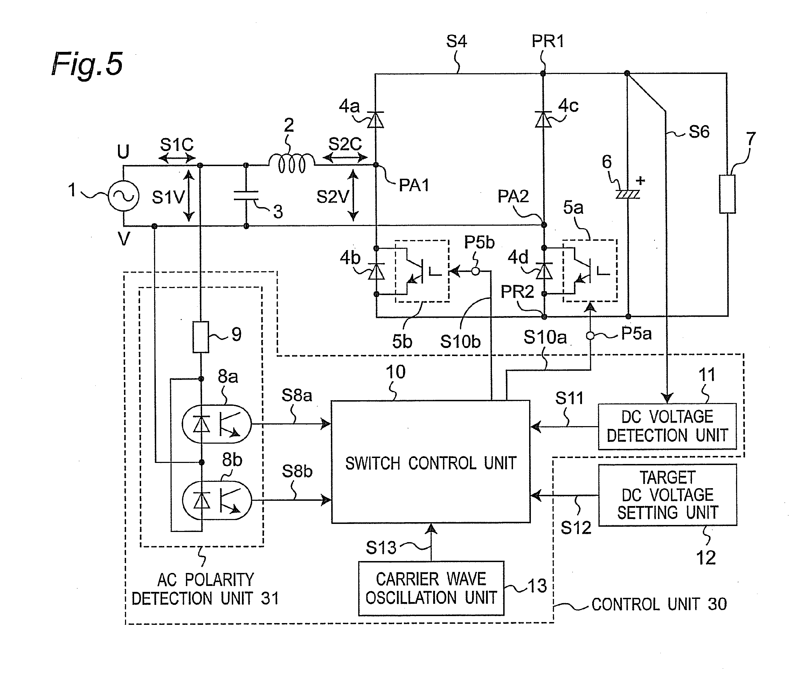

FIG. 5 is a block diagram of a DC power supply device according to a third embodiment of the invention. In FIG. 5 the switch device 5a parallel connected to the diode 4a in FIG. 1 is omitted, and the switch device 5a is instead parallel connected to the diode 4d.

The path of the reactor current S2C is described next. For purposes of this description the impedance of the load 7 is set sufficiently high, and the current flowing through the load 7 is ignored, but the same description may apply when the impedance is low.

First, in the positive AC period TAP the switch device 5a is always off. When the switch device 5b is on, the reactor current S2C flows substantially sequentially through the storage path from the reactor 2 through the AC input terminal PA1, switch device 5b, negative rectification output terminal PR2, diode 4d, AC input terminal PA2, and AC power source 1. There are two active devices on the storage path, the switch device 5b and the diode 4d.

When the switch device 5b is off, the reactor current S2C flows substantially sequentially through the discharge path from the reactor 2 through the AC input terminal PA1, diode 4a, positive rectification output terminal PR1, smoothing capacitor 6, negative rectification output terminal PR2, diode 4d, AC input terminal PA2, and the AC power source 1. There are two active devices on the discharge path, diode 4a and diode 4d.

The diode 4a prevents reverse current in the step-up chopper operation when the switch device 5b is on, and when the switch device 5b is off passes the reactor current S2C in the conduction direction.

Next, in the negative AC period TAN the switch device 5b is always off. When the switch device 5a is on, the reactor current S2C flows substantially sequentially through the storage path from the reactor 2 to the AC power source 1, AC input terminal PA2, switch device 5a, negative rectification output terminal PR2, diode 4b, and the AC input terminal PA1. There are two active devices on the storage path, switch device 5a and diode 4b.

When the switch device 5a is off, the reactor current S2C flows substantially sequentially through the discharge path from the reactor 2 to the AC power source 1, AC input terminal PA2, diode 4c, positive rectification output terminal PR1, smoothing capacitor 6, negative rectification output terminal PR2, diode 4b, and the AC input terminal PA1. There are two active devices on the discharge path, the diode 4c and the diode 4b.

The diode 4c prevents reverse current in the step-up chopper operation when the switch device 5a is on, and when the switch device 5a is off passes the reactor current S2C in the conduction direction.

Other aspects of the configuration and operation of this embodiment are the same as the first embodiment, and the effect of this embodiment is also the same as the first embodiment. In addition, the DC power supply device according to this third embodiment uses a high voltage resistance NOR gate unit 16a as the switch control unit 10 to control the switch device 5a, and there is no need to provide an insulated power supply for the NOR gate unit 16a. The control unit can thus be rendered using only low voltage circuits, the cost can be further reduced, and a DC power supply device with high reliability and a long service life can be provided.

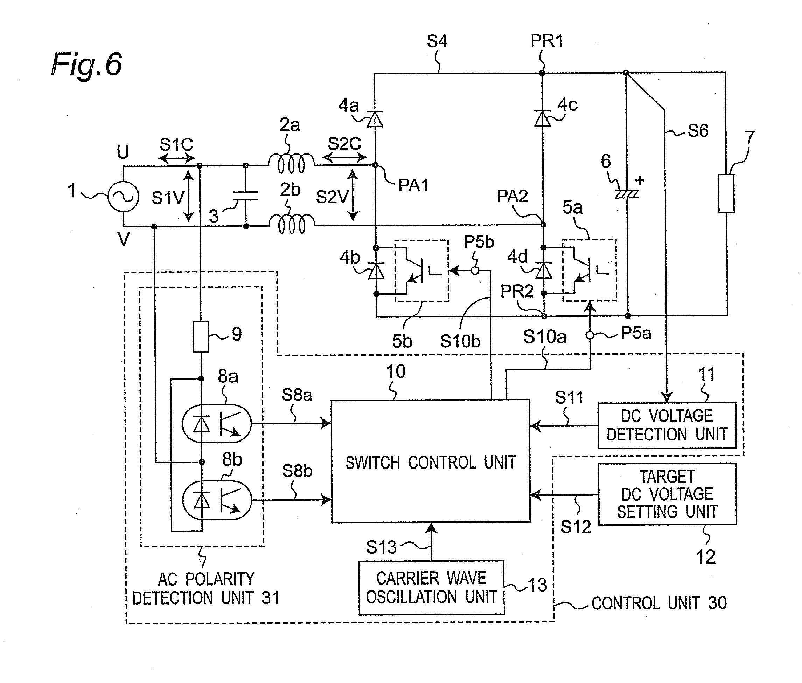

Note that as shown in FIG. 6 the reactor 2 can be split in two and connected as reactors 2a and 2b between the AC power source 1 and the AC input terminals PA1 and PA2. As a result, fluctuation in the common mode voltage applied to the AC power supply can be suppressed, the number of noise reduction parts can be reduced, and the cost and size can be further reduced. The reactor unit includes reactors 2a and 2b, and is inserted between the AC power source 1 and the AC input terminals PA1 and PA2.

Embodiment 4

The fourth embodiment of the invention is described below focusing on the differences from the first embodiment. Other aspects of the configuration, operation, and effect of this embodiment are the same as the first embodiment, and further description thereof is thus omitted.

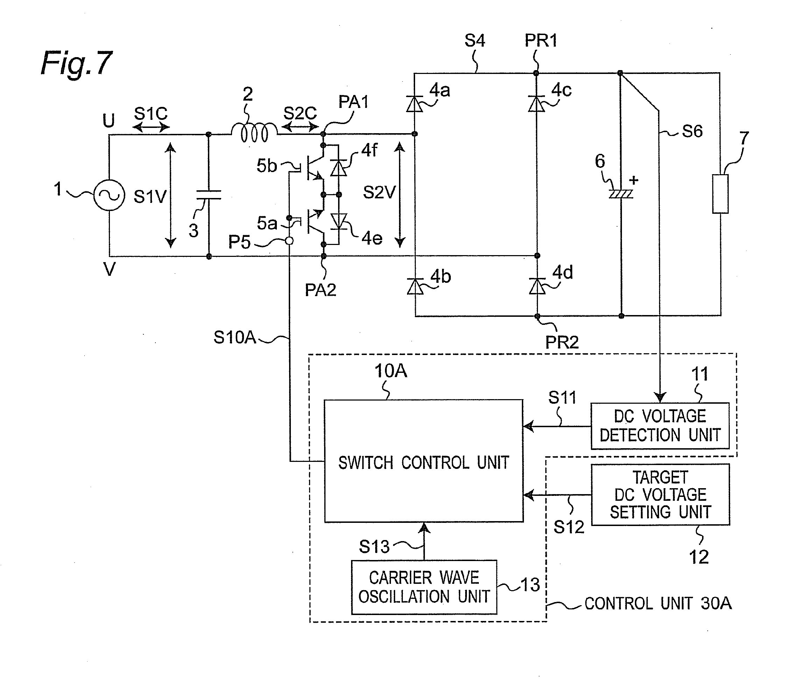

FIG. 7 is a block diagram of a DC power supply device according to the fourth embodiment of the invention. In FIG. 7 the switch devices 5a and 5b parallel connected to the diodes 4a and 4b in FIG. 1 are omitted, and instead diodes 4f and 4e are connected to the AC input terminals PA1 and PA2 and switch devices 5b and 5a are respectively connected parallel to the diodes 4f and 4e. In addition, the AC polarity detection unit 31 shown in FIG. 1 is omitted, and a switch control unit 10A to which AC polarity signals S8a and S8b are not input is connected instead of switch control unit 10. The switch devices 5a and 5b and the diodes 4a, 4b, 4c, 4d, 4e, 4f are included in the rectifier unit.

More specifically, the diodes 4f and 4e are alternately connected in series in the sequence diode 4f and diode 4e from the AC input terminal PA1 to the AC input terminal PA2 so that the conduction directions are respectively to AC input terminal PA1 and AC input terminal PA2. The switch device 5b is connected parallel to the diode 4f with the conduction direction reversed, and the switch device 5a is connected parallel to the diode 4e with the conduction direction reversed. As shown in FIG. 2B, the switch control unit 10A connects a NOT gate unit 16 instead of the NOR gate units 16a, 16b in the switch control unit 10 shown in FIG. 2A, and generates a single control signal S10A instead of the two control signals S10a and S10b (see FIG. 3A).

The switch devices 5b and 5a switch according to the control signal S10A. The path of the reactor current S2C is described next. For purposes of this description the impedance of the load 7 is set sufficiently high, and the current flowing through the load 7 is ignored, but the same description may apply when the impedance is low.

First, in the positive AC period TAP the switch device 5a is always off. When the control signal S10A is high, the switch device 5b goes on, and the reactor current S2C flows substantially sequentially through the storage path from the reactor 2 to the AC input terminal PA1, switch device 5b, diode 4e, AC input terminal PA2, and AC power source 1. There are two active devices on the storage path, the switch device 5b and the diode 4e.

When the control signal S10A is low, the switch device 5b goes off, and the reactor current S2C flows substantially sequentially through the discharge path from the reactor 2 to the AC input terminal PA1, diode 4a, positive rectification output terminal PR1, smoothing capacitor 6, negative rectification output terminal PR2, diode 4d, AC input terminal PA2, and AC power source 1. There are two active devices on the discharge path, the diode 4a and the diode 4d.

When the switch device 5b is on, the diodes 4a, 4b, 4c, 4d prevent reverse current in the step-up chopper operation, and when the switch device 5b is off, diode 4a and diode 4d pass the reactor current S2C in the conduction direction.

Next, in the negative AC period TAN the switch device 5b is always off. When the control signal S10A is high, the switch device 5a goes on, and the reactor current S2C flows substantially sequentially through the storage path from the reactor 2 to the AC power source 1, AC input terminal PA2, switch device 5a, diode 4f, and AC power source 1. There are two active devices on the storage path, the switch device 5a and the diode 4f.

When the control signal S10A is low, the switch device 5a goes off, and the reactor current S2C flows substantially sequentially through the discharge path from the reactor 2 to AC power source 1, AC input terminal PA2, diode 4c, positive rectification output terminal PR1, smoothing capacitor 6, negative rectification output terminal PR2, diode 4b, and AC input terminal PA1. There are two active devices on the discharge path, the diode 4c and the diode 4b.

When the switch device 5a is on, the diodes 4a, 4b, 4c, 4d prevent reverse current in the step-up chopper operation, and when the switch device 5a is off, diode 4b and diode 4c pass the reactor current S2C in the conduction direction.

Other aspects of the configuration and operation of this embodiment are the same as the first embodiment, and the effect of this embodiment is also the same as the first embodiment. In addition, the DC power supply device according to the fourth embodiment of the invention can also omit the AC polarity detection unit 31 that is used in the first to third embodiments, and the cost and size can be further reduced by reducing the parts count. In addition, power consumption by the AC polarity detection unit 31 can be eliminated.

Note further that by rendering the switch devices 5a and 5b using metal oxide semiconductor (MOS) devices, the reverse conduction diodes 4e and 4f can be omitted, and power loss can be further reduced by synchronous rectification. In addition, a bidirectional switch may be rendered using a combination of one switch device and a diode bridge.

As described above, the DC power supply device according to the present invention is configured to change the pulse width of the control signal that controls the step-up chopper switch device based only on the target DC voltage and the detected DC voltage. As a result, the parts count can be reduced and the control unit can be simplified, harmonic current can be reduced, and the power factor can be improved. Therefore, a DC power supply device according to the present invention can be used in an input stage circuit of a general purpose inverter, and in the input stage circuit of home appliances that use a compressor, such as air conditioners and refrigerators.

The invention being thus described, it will be obvious that it may be varied in many ways. Such variations are not to be regarded as a departure from the spirit and scope of the invention, and all such modifications as would be obvious to one skilled in the art are intended to be included within the scope of the following claims.

Industrial Applicability

The present invention can be used in a direct current power supply device and in air conditioners that use a DC power supply device.

Reference: Signs List

| | |
|---|---|
| 1 | AC power source |
| 2, 2a, 2b | reactor |
| 3 | filter capacitor |
| 4a, 4b, 4c, 4d, 4e, 4f | diode |
| 5a, 5b | switch |
| 6, 6a, 6b | smoothing capacitor |
| 7 | load |
| 8a, 8b | photocoupler |
| 9 | resistance |
| 10, 10A | switch control unit |
| 11 | DC voltage detection unit |
| 12 | target DC voltage setting unit |
| 13 | carrier wave oscillation unit |
| 14 | difference voltage detection unit |
| 15 | comparison unit |
| 16 | NOT gate unit |
| 16a, 16b | NOR gate unit |
| 30, 30A | control unit |
| 31 | AC polarity detection unit |
| PA1, PA2 | AC input terminal |
| PR1 | positive rectification output terminal |
| PR2 | negative rectification output terminal |

**Claims**

1. A direct current power supply device comprising:

a rectifier unit (4a, 4b, 4c, 4d, 5a, 5b; 4a, 4b, 5a, 5b; 4a, 4b, 4c, 4d, 4e, 4f, 5a, 5b) that has first and second diodes (4b, 4a; 4b, 4d; 4f, 4e) and first and second switch units (5b, 5a) respectively connected parallel in reverse conduction direction to the first and second diodes, rectifies alternating current (S1V, S1C) from an AC power source (1), and generates a rectified voltage (S4);

a reactor unit (2; 2a, 2b) that has one reactor and is inserted between the AC power source and first and second AC input terminals (PA1, PA2) of said rectifier unit;

a smoothing unit (6; 6a, 6b) that is connected to the positive and negative rectification output terminals (PR1, PR2) of said rectifier unit, smooths the rectified voltage, and generates a DC voltage (S6) with the voltage of a substantially direct current;

a target DC voltage setting unit (12) that sets a target DC voltage (S12) denoting a target value for the DC voltage; and

a control unit (30; 30A) that generates a control signal (S10a, S10b; S10A) having a pulse signal (S15) with a pulse width that changes according to a difference voltage of the target DC voltage and the DC voltage and a pulse period (TPWM) that is shorter than the basic period of the alternating current;

wherein the first and second switch units change the path of the current flowing to said reactor unit by switching according to the control signal and execute a step-up chopper operation.

2. The direct current power supply device described in claim 1, wherein:

the first and second diodes are inserted in series to each other from the first AC input terminal to the second AC input terminal in the sequence first diode and second diode so that the conduction direction is respectively to the first and second AC input terminal sides; and

the first and second switch units are controlled based on a single control signal (S10A).

3. The direct current power supply device described in claim 1, wherein:

said control unit comprises an alternating current polarity detection unit (31) that detects the polarity of the alternating current and generates an AC polarity signal (S8a, S8b), and generates two control signals (S10a, S10b) based on the pulse signal and the AC polarity signal; and

the first and second switch units are respectively controlled based on one and the other of the two control signal.

4. The direct current power supply device described in claim 3, wherein:

the first diode (4b) is inserted so that the conduction direction is from the negative rectification output terminal to the first AC input terminal; and
the second diode (4a) is inserted so that the conduction direction is from the first AC input terminal to the positive rectification output terminal.

5. The direct current power supply device described in claim 4, wherein said rectifier unit comprises:

a third diode (4d) inserted with the conduction direction from the negative rectification output terminal to the second AC input terminal; and
a fourth diode (4c) inserted with the conduction direction from the second AC input terminal to the positive rectification output terminal.

6. The direct current power supply device described in claim 4, wherein said smoothing unit comprises:

a first capacitor (6b) inserted between the second AC input terminal and the negative rectification output terminal; and
a second capacitor (6a) inserted between the positive rectification output terminal and the second AC input terminal.

7. The direct current power supply device described in claim 3, wherein:

the first diode (4b) is inserted with the conduction direction from the negative rectification output terminal to the first AC input terminal, and
the second diode (4d) is inserted with the conduction direction from the negative rectification output terminal to the second AC input terminal.

8. The direct current power supply device described in claim 3, wherein:

the alternating current polarity detection unit comprises
a first photocoupler (8a) inserted so that the conduction direction of the input diode goes from one terminal (V) to the other terminal (U) of the AC power source,
a second photocoupler (8b) inserted so that the conduction direction of the input diode is the reverse of the first photocoupler, and
the first and second photocouplers respectively generate first and second AC polarity signals (S8a, S8b).

9. The direct current power supply device described in claim 1, wherein:

the first and second switch units alternately change first and second paths of the current flowing to said reactor unit;
the first path includes the path of the conduction direction of either one of the first or second switch units; and
the second path includes the path of the conduction direction of a third diode that prevents reverse current in the step-up chopper operation.

10. The direct current power supply device described in claim 1, wherein said reactor unit comprises a first reactor inserted between a first AC input terminal and the AC power source.

11. The direct current power supply device described in claim 10, wherein said reactor unit comprises a second reactor inserted between a second AC input terminal and the AC power source.

12. The direct current power supply device described in claim 1, wherein said control unit comprises:

a difference voltage detection unit (14) that generates a difference voltage signal (S14) representing the difference voltage of the target DC voltage and the DC voltage;
a carrier wave oscillation unit (13) that generates a carrier wave signal (S13) with a period (TPWM) shorter than the basic period of the alternating current; and
a comparison unit (15) that generates the control signal representing a result of comparing the difference voltage signal and the carrier wave signal.

**13.** The direct current power supply device described in claim 1, wherein:

the first and second switch units have both a switchable state (ST1) and a no-switching state (ST2) in each basic period of the alternating current, and switch in the switchable state.

**14.** The direct current power supply device described in claim 13, wherein:

when either one of the first and second switch units is in the switchable state, the other is in the no-switching state.

**15.** The direct current power supply device described in claim 13, wherein:

the period of the switchable state is shorter than the period of the no-switching state.

**16.** The direct current power supply device described in claim 1, wherein:

said control unit limits the pulse width in the pulse period to within a predetermined period.

**17.** An air conditioner comprising the direct current power supply device described in claim 1.

*Fig.1*

*Fig.2A*

*Fig.2B*

# Fig.3A

# Fig.3B

## Fig.3C

| | AC VOLTAGE S1V | POSITIVE | | DC VOLTAGE S6 | NEGATIVE | | DC VOLTAGE S6 |
|---|---|---|---|---|---|---|---|
| CONTROL SIGNAL | S10a | LOW | | | HIGH | LOW | |
| | S10b | HIGH | LOW | | LOW | | |
| | S10 | HIGH | LOW | | HIGH | LOW | |
| SWITCH UNIT | 5a | OFF | | | ON | OFF | |
| | 5b | ON | OFF | | OFF | | |
| PERIOD | S11<S12 | LONG | SHORT | STEP UP | LONG | SHORT | STEP UP |
| | S11>S12 | SHORT | LONG | STEP DOWN | SHORT | LONG | STEP DOWN |

EP 2 107 675 A1

Fig.4

*Fig.5*

Fig.6

Fig.7

Fig.8

## Fig.9

OUTPUT OF CURRENT
DETECTION CIRCUIT 17p

POSITIVE OUTPUT
OF BRIDGE RECTIFIER
CIRCUIT 21p

25p

FULL-WAVE
RECTIFICATION WAVE
DETECTION CIRCUIT

26p

MULTIPLIER

23p

15p

SWITCH
DRIVE SIGNAL

CARRIER WAVE
OSCILLATOR

13p

POSITIVE VOLTAGE
OF SMOOTHING
CAPACITOR 6p

11p

DC VOLTAGE
DETECTION CIRCUIT

REFERENCE VOLTAGE
SETTING CIRCUIT

12p

14p

EP 2 107 675 A1

*Fig.10*

CONTROL CIRCUIT

20Ap

## INTERNATIONAL SEARCH REPORT

| International application No. |
|---|
| PCT/JP2008/050880 |

A.  CLASSIFICATION OF SUBJECT MATTER
*H02M7/12*(2006.01)i

According to International Patent Classification (IPC) or to both national classification and IPC

B.  FIELDS SEARCHED

Minimum documentation searched (classification system followed by classification symbols)
H02M7/12

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 8-205542 A  (Sanken Electric Co., Ltd.), 09 August, 1996 (09.08.96), Full text; all drawings (Family: none) | 1-17 |
| Y | JP 2001-314085 A  (Matsushita Electric Industrial Co., Ltd.), 09 November, 2001 (09.11.01), Par. Nos. [0045] to [0054]; Fig. 9 (Family: none) | 1-17 |
| Y | JP 2001-78458 A  (Kyosan Electric Mfg. Co., Ltd.), 23 March, 2001 (23.03.01), Par. Nos. [0016] to [0032]; Fig. 1 (Family: none) | 2,6 |

☒  Further documents are listed in the continuation of Box C.        ☐  See patent family annex.

| *    Special categories of cited documents: | "T"  later document published after the international filing date or priority date and not in conflict with the application but cited to understand the principle or theory underlying the invention |
|---|---|
| "A"  document defining the general state of the art which is not considered   to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| 14 April, 2008 (14.04.08) | 22 April, 2008 (22.04.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/050880

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-158878 A (Mitsubishi Electric Corp.), 30 May, 2003 (30.05.03), Par. No. [0002]; Fig. 1 (Family: none) | 11 |

Form PCT/ISA/210 (continuation of second sheet) (April 2007)

**REFERENCES CITED IN THE DESCRIPTION**

**Patent documents cited in the description**

- JP H8321425 B

- JP H1117658 B